# EUROPÄISCHE PATENTSCHRIFT

(11) **EP 0 538 644 B1**
(45) Veröffentlichungstag und Bekanntmachung des Hinweises auf die Patenterteilung: **02.04.1997**
(21) Anmeldenummer: 92116444.8
(22) Anmeldetag: 25.09.1992
(51) Int. Cl.: H04L 27/12, H04L 27/14

(54) **Optische Datenübertragung mit Frequenzsprungmodulation**
Optical data transmission with FSK
Transmission optique de données à modulation en sauts de fréquence

(30) Priorität: 19.10.1991 DE 4134564
(43) Veröffentlichungstag der Anmeldung: 28.04.1993
(73) Patentinhaber: Daimler-Benz Aerospace Airbus Gesellschaft mit beschränkter Haftung, 21129 Hamburg (DE)
(72) Erfinder: Casdorf, Rainer, W-2000 Wedel/Holstein (DE); Gleine, Wolfgang, W-2117 Kakenstorf (DE); Kruse, Josef, W-2000 Hamburg 56 (DE)
(74) Vertreter: Hansmann, Dierk, Dipl.-Ing.

(56) Entgegenhaltungen:
- DE-B- 2 852 374
- US-A- 4 425 666
- US-A- 4 959 827
- PATENT ABSTRACTS OF JAPAN vol. 012, no. 177 (E-613) & JP-A-62 285 555
- PATENT ABSTRACTS OF JAPAN vol. 9, no. 81 (E-307) & JP-A-59 214 361
- PATENT ABSTRACTS OF JAPAN vol. 11, no. 81 (E-488)(2528) & JP-A-61 234 152

## Beschreibung

Die Erfindung bezieht sich auf eine Schaltungsanordnung zum Übertragen bipolarer Datensignale, mit einem von den Datensignalen ansteuerbaren Modulator, dessen Ausgangssignale über eine optische Datenübertragungsstrecke mit Eingangs- und Ausgangswandlern zu einem das bipolare Datensignal reproduzierenden Demodulator gelangen.

Zur Übertragung von Daten ist es seit langer Zeit bekannt, die Daten auf der Sendeseite mit einem Modulator einem Träger aufzuprägen und über eine Datenstrecke zu einem Empfänger zu senden. Auf der Empfangsseite wird das Empfangssignal dann einem Demodulator zugeleitet, um das gewünschte Datensignal für die beabsichtigte Weiterverwendung zu erhalten. Solche Übertragungssysteme arbeiten dann hinreichend zuverlässig, wenn Störungen jedweder Art praktisch ohne Einfluß auf die Datenübertragung bleiben.

Zum Übertragen von Daten sind in jüngster Zeit auch sog. Bussysteme entwickelt worden, welche auch für Avionic-Systeme in Luftfahrzeugen einsetzbar sind. In Luftfahrzeugen werden spezielle Bussysteme, und zwar sog. ARINC-Bussysteme eingesetzt, um die Störsicherheit der Datenübertragung zu verbesern. Solche Bussysteme sind unidirektionale Bussysteme und bestehen aus einem Datensender, der über eine abgeschirmte Doppelleitung mit dem Datenempfänger gekoppelt ist. Die Abschirmung der Doppelleitung sichert zusammen mit Filtern im Eingang des Empfängers eine ausreichende Störsicherheit, aber eine vollkommene störungsfreie Datenübertragung ist auf diese Weise nicht möglich.

Der Erfindung liegt daher die Aufgabe zugrunde eine Schaltungsanordnung zur Übertragung bipolarer Datensignale zu schaffen, welche in bezug auf das Eindringen elektromagnetischer Störfelder unempfindlich ist. Diese Aufgabe ist gemäß der Erfindung dadurch gelöst, daß die Datensignale über Optokoppler auf die Steuereingänge einer mit drei im festen Verhältnis zueinander stehenden Signalfrequenzen (fa, fb, fc) versorgten digitalen Auswertelogik geschaltet sind, daß die Ausgangssignale der Auswertelogik eine Photo-Sendediode ansteuern, deren Lichtsignale über einen Lichtwellenleiter zu einer Empfangsdiode gelangen, und daß die Ausgangssignale der Empfangsdiode auf zwei mit Signalfrequenzen (f1, f2) konstanten Verhältnisses versorgte Frequenzkomparatoren geschaltet sind, deren Ausgangssignale eine die bipolaren Datensignale reproduzierende Auswertelogik ansteuern.

Die erfindungsgemäße Art der Datenübertragung hat den Vorteil einer ausgezeichneten elektromagnetischen Verträglichkeit, da der für die Übertragungsstrecke eingesetzte Lichtleiter praktisch unempfindlich gegen elektromagnetische Störfelder ist. Weiterbildungen und vorteilhafte Ausgestaltungen der Erfindung sind den Ansprüchen 2 bis 10 zu entnehmen.

Die Erfindung wird anhand der Zeichnung näher erläutert. Es zeigen:
- Fig. 1: ein Blockschaltbild eines einen Lichtwellenleiter ansteuernden Senders und
- Fig. 2: ein Blockschaltbild eines über einen Lichtwellenleiter angesteuerten Empfängers.

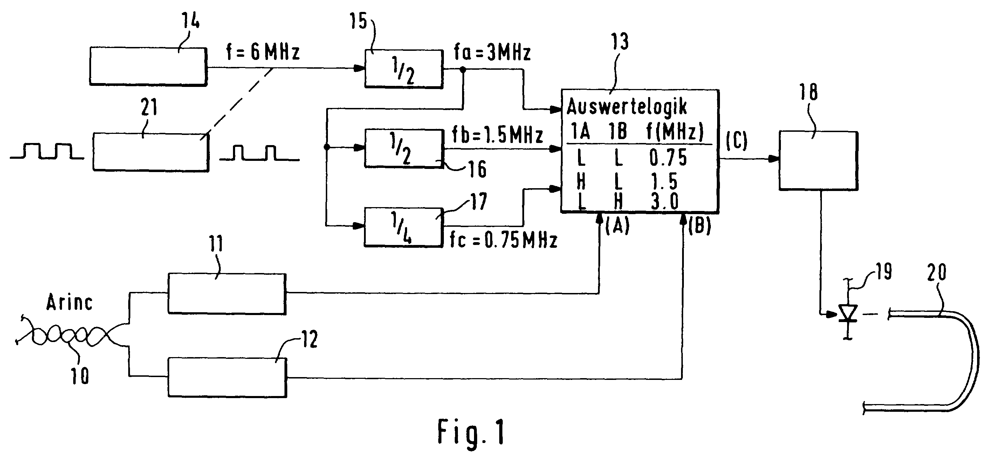

Bei der erfindungsgemäßen Datenübertragung gemäß Fig. 1 werden die zu übertragenden ARINC-Daten mit einer Doppelleitung 10 zugeführt und jeder Draht der Doppelleitung 10 wird über einen Optokoppler 11, 12 zur galvanischen Trennung an einen Steuereingang A bzw. B einer digitalen Auswertelogik 13 angeschlossen.

Der Zusammenhang zwischen dem ARINC-Signal und dem an den Steuereingängen A, B anliegenden Datensignal ist der nachfolgenden Tabelle zu entnehmen.

| ARINC | A | B |
|---|---|---|
| + 10 V (Hi) | Hi | Lo |
| 0 V (Null) | Lo | Lo |
| - 10 V (Lo) | Lo | Hi |

Die Auswertelogik 13 erhält weiterhin drei Signalfrequenzen fa, fb, fc die vom Ausgangssignal des eine Impulsfolgefrequenz von 6 MHz aufweisenden Rechteckoszillators 14 durch Frequenzteilung abgeleitet sind. Dazu wird das Ausgangssignal des Rechteckoszillators 14 zunächst auf einen Frequenzteiler 15 gegeben, welcher die Frequenz halbiert und eine Signalfrequenz von fa = 3 MHz für die Auswertelogik 13 erzeugt. Von dieser Signalfrequenz fa wird mit einem zweiten Frequenzteiler 16 durch Halbierung die Signalfrequenz fb = 1,5 MHz und mit einem dritten Frequenzteiler 17 durch Viertelung die Signalfrequenz fc = 0,75 MHz erzeugt.

Im Betrieb schaltet die Auswertelogik 13 in Abhängikeit der Pegel der an den Steuereingängen A, B anliegenden Datensignale jeweils eine der Signalfrequenzen fa, fb, fc an den Ausgang C gemäß folgender Tabelle durch.

| A | B | C (fa) |
|---|---|---|
| Lo | Lo | 0,75 MHz |
| Hi | Lo | 1,50 MHz |
| Lo | Hi | 3,00 MHz |

Das Ausgangssignal wird daher in seiner Frequenz (fo) in Abhängigkeit der zugeleiteten Datensignale verändert und dieses Ausgangssignal wird über einen Verstärker 18 auf eine Photo-Sendediode 19 geschaltet. Die auf diese Weise erzeugbaren Lichtsignale werden dann auf einen Lichtwellenleiter 20 zur Übertragung zu einem Empfänger gegeben. Zur Erhöhung der Lebensdauer der Sendediode 19 kann zwischen den Rechteckoszillator 14 und den Frequenzteiler 15 auch ein Tastzeitumsetzer 21 eingeschaltet werden. Dieser Tastzeitumsetzer 21 bietet die Möglichkeit das Tastzeitverhältnis so einzustellen, daß die innerhalb der stromführenden Zeit erzeugte Joulsche Wärme der Sendediode 19 während der Auszeit an die Umgebung der Sendediode 19 abgeführt werden kann.

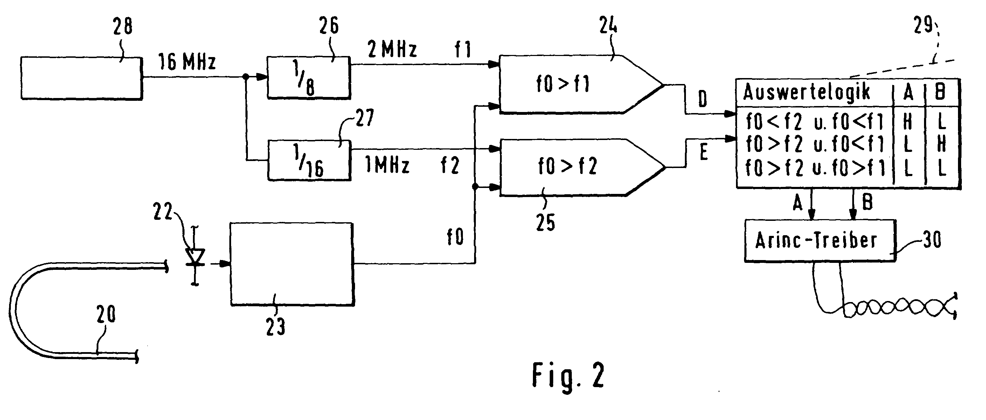

Das in den Lichtwellenleiter 20 eingekoppelte amplitudenmodulierte Lichtsignal wird von diesem übertragen und wie Fig. 2 zeigt von einer Empfangsdiode 22 auf der Empfangsseite in ein elektrisches Signal gewandelt. Dieses mit der Modulationsfrequenz fa der übertragenen Lichtsignale übereinstimmende elektrische Signal wird mit einem Verstärker 23 verstärkt und jeweils einem Eingang zweier Frequenzkomparatoren 24, 25 zugeleitet. Die Frequenzkomparatoren 24, 25 erhalten weiterhin jeweils eine Signalfrequenz von f1 = 2 MHz und f2 = 1 MHz, die durch Frequenzteilung vom Ausgangssignal eines Rechteckwellenoszillators 28 erzeugt werden kann. Dazu wird das Ausgangssignal des Rechteckoszillators 28 von 16 MHz in einem ersten Frequenzteiler 26 durch acht geteilt und als Signalfrequenz von f1 = 2 MHz dem Frequenzkomparator 24 zugeleitet. Mit einem zweiten Frequenzteiler 27 wird gleichzeitig das Ausgangssignal des Rechteckoszillators 28 durch 16 geteilt und als Signalfrequenz von f2 = 1 MHz dem Frequenzkomparator 25 zugeleitet. Die Frequenzkomparatoren 24, 25 vergleichen die Frequenz des Empfangssignals fo mit den Frequenzen f1, f2 der Signalfrequenzen. Die Vergleichsfrequenzen f1, f2 sind dabei so gewählt, daß diese jeweils zwischen den Frequenzen fa, fb und fc liegen. Die Ausgangssignale D, E der Frequenzkomparatoren 24, 25 liegen dabei auf einem logischen Hochpegel, wenn die Frequenz fo des Empfangssignals jeweils > f2 bzw. > f1 ist. Da das Empfangssignal aber zwischen den Werten 3 MHz, 1,5 MHz und 0,75 MHz schwankt, schwankt auch der Pegel der Frequenzkomparatoren 24, 25 zwischen logisch hoch und logisch tief. Die Ausgangssignale D, E der Frequenzkomparatoren 24, 25 werden anschließend einer Auswertelogik 29 zugeleitet, welche das ursprüngliche (ARINC) - Datensignal gemäß folgender Tabelle reproduziert.

| D | E | A | B |
|---|---|---|---|
| fo > f1 | fo > f2 | L | L |
| fo < f1 | fo > f2 | L | H |
| fo < f1 | fo < f2 | H | L |

Die auf diese Weise erzeugbaren Datensignale werden dann über eine Treiberstufe 30 weitergeschaltet. Die erfindungsgemäße Methode des Frequenzvergleichs hat den Vorteil, daß für eine korrekte Signalerkennung keine hohen Anforderungen an die Frequenzstabilität der Rechteckoszillatoren auf der Sende- und Empfangsseite gestellt werden müssen. Die Frequenzkomparatoren 24, 25 erlauben einen eindeutigen Frequenzvergleich immer dann, wenn die Frequenzen f1 und fo bzw. f2 und fo sich nur um die Frequenzempfindlichkeit der Frequenzkomparatoren unterscheiden. Für das zuvor beschriebene Ausführungsbeispiel beträgt die Komparatorenempfindlichkeit ca ± 100 kHz, was einer minimalen Oszillatorstabilität von ca. 25 % entspricht.

Das erfindungsgemäße Datenübertragungssystem ermöglicht es daher ein sog. ARINC-Datensignal über Lichtwellenleiter störungsfrei zu übertragen. Für die dazu einsetzbaren Schaltstufen, insbesondere Oszillatoren, können dabei solche mit geringer Grundstabilität eingesetzt werden, was einen Einsatz dieses Systems in einem weiteren Temperaturbereich z.B. - 55 °C bis + 100 °C ohne besondere frequenzstabilisierende Maßnahmen ermöglicht.

### Bezugszahlen

- 10: Doppelleitung
- 11: Optokoppler
- 12: Optokoppler
- 13: Auswertelogik
- 14: Rechteckoszillator
- 15: Frequenzteiler
- 16: Frequenzteiler
- 17: Frequenzteiler
- 18: Verstärker
- 19: Photo-Sendediode
- 20: Lichtwellenleiter
- 21: Tastzeitumsetzer
- 22: Empfangsdiode
- 23: Verstärker
- 24: Frequenzkomparator
- 25: Frequenzkomparator
- 26: Frequenzteiler
- 27: Frequenzteiler
- 28: Rechteckoszillator
- 29: Auswertelogik
- 30: Treiberstufe

## Patentansprüche

1. Schaltungsanordnung zum Übertragen bipolarer Datensignale, mit einem von den Datensignalen ansteuerbaren Modulator, dessen Ausgangssignale über eine optische Datenübertragungsstrecke mit Eingangs- und Ausgangswandlern zu einem das bipolare Datensignal reproduzierenden Demodulator gelangen, dadurch gekennzeichnet, daß die Datensignale über Optokoppler (11, 12) auf die Steuereingänge (A, B) einer mit drei im festen Verhältnis zueinander stehenden Signalfrequenzen (fa, fb, fc) versorgten digitalen Auswertelogik (13) geschaltet sind, daß die Ausgangssignale (fo) der Auswertelogik (13) eine Photo-Sendediode (19) ansteuern, deren Lichtsignale über einen Lichtwellenleiter (20) zu einer Empfangsdiode (22) auf zwei mit Signalfrequenzen (f1, f2) konstanten Verhältnisses versorgte Frequenzkomparatoren (24, 25) geschaltet sind, deren Ausgangssignale eine die bipolaren Datensignale reproduzierende Auswertelogik (29) ansteuern.

2. Schaltungsanordnung nach Anspruch 1, dadurch gekennzeichnet, daß zur Erzeugung der drei Signalfrequenzen (fa, fb, fc) ein Rechteckoszillator (14) vorgesehen ist, und daß die Impulsfolgefrequenz des Rechteckoszillators von 6 MHz in drei nachgeschalteten binären Frequenzteilern (15, 16, 17) auf fa = 3 MHz, fb = 1,5 MHz und fc = 0,75 MHz geteilt ist.

3. Schaltungsanordnung nach Anspruch 1 oder 2, dadurch gekennzeichnet, daß zwischen den Rechteckoszillator (14) und die Frequenzteiler (15, 16, 17) ein Tastzeitumsetzer (21) zur Beeinflussung der Impulsbreiten der Signalfrequenzen (fa, fb, fc) eingeschaltet ist.

4. Schaltungsanordnung nach einem der Ansprüche 1 bis 3, dadurch gekennzeichnet, daß die Auswertelogik (13) jeweils eine der drei Signalfrequenzen (fa, fb, fc) in Abhängigkeit der Pegel der über die Optokoppler (11, 12) zugeführten Datensignale an den Ausgang (C) durchschalten.

5. Schaltungsanordnung nach einem der Ansprüche 1 bis 4, dadurch gekennzeichnet, daß das Ausgangssignal der Auswertelogik (13) über einen Verstärker (18) der Photo-Sendediode (19) zugeleitet ist.

6. Schaltungsanordnung nach einem der Ansprüche 1 bis 5, dadurch gekennzeichnet, daß Ausgangssignal der Empfangsdiode (22) über einen Verstärker (23) den Frequenzkomparatoren (24, 25) zugeleitet ist.

7. Schaltungsanordnung nach einem der Ansprüche 1 bis 6, dadurch gekennzeichnet, daß für die Erzeugung der zwei die Frequenzkomparatoren (24, 25) steuernden Signalfrequenzen (f1, f2) ein Rechteckoszillator (28) mit einer Impulsfolgefrequenz von 16 MHz vorgesehen ist, und daß die Impulsfolgefrequenz dieses Rechteckoszillators (28) mit zwei nachgeschalteten binären Frequenzteilern (26, 27) auf f1 = 2 MHz und f2 = 1 MHz geteilt ist.

8. Schaltungsanordnung nach einem der Ansprüche 1 bis 7, dadurch gekennzeichnet, daß die Schaltschwelle der Frequenzkomparatoren (24, 25) derart eingestellt ist, daß diese jeweils ein Ausgangssignal mit logischem Hochpegel (H) liefern, wenn die Frequenz des von der Empfangsdiode (22) erhaltenen Ausgangssignals jeweils größer f1, bzw. f2 ist.

9. Schaltungsanordnung nach einem der Ansprüche 1 bis 8, dadurch gekennzeichnet, daß die Auswertelogik (29) das ursprüngliche Datensignal in Abhängigkeit der Pegel der von den Frequenzkomparatoren (24, 25) zugeleiteten Ausgangssignale erzeugt.

10. Schaltungsanordnung nach einem der vorhergehenden Ansprüche, dadurch gekennzeichnet, daß das in der Auswertelogik (29) reproduzierte Datensignal über eine Treiberstufe (30) weitergeschaltet ist.

## Claims

1. Circuit arrangement for transmitting bipolar data signals, with a modulator which can be activated by the data signals and the output signals from which pass, via an optical data-transmission route with input and output converters, to a demodulator reproducing the bipolar data signal, characterised in that the data signals are fed, via optocouplers (11, 12), to the control inputs (A, B) of a digital evaluating logic (13) which is supplied with three signal frequencies (fa, fb, fc) which are in a fixed ratio to one another, that the output signals (fo) from the evaluating logic (13) activate a transmitting photodiode (19), the light signals from which are fed, via a light-wave conductor (20) at a receiving diode (22), to two frequency comparators (24, 25) which are supplied with signal frequencies (f1, f2) of constant ratio and the output signals from which activate an evaluating logic (29) reproducing the bipolar data signals.

2. Circuit arrangement according to claim 1, characterised in that a square-wave oscillator (14) is provided for generating the three signal frequencies (fa, fb, fc), and that the pulse repetition frequency of the square-wave oscillator of 6 MHz is divided, in three succeeding binary frequency dividers, into fa = 3 MHz, fb = 1.5 MHz and fc = 0.75 MHz.

3. Circuit arrangement according to claim 1 or 2, characterised in that a keying time transposer (21) for influencing the pulse widths of the signal frequencies (fa, fb, fc) is interpolated between the square-wave oscillator (14) and the frequency dividers (15, 16, 17).

4. Circuit arrangement according to one of claims 1 to 3, characterised in that the evaluating logic (13) feeds through one of the three signal frequencies (fa, fb, fc), in each case, to the output (C) in dependence on the level of the data signals delivered via the optocouplers (11, 12).

5. Circuit arrangement according to one of claims 1 to 4, characterised in that the output signal from the evaluating logic (13) is conducted, via an amplifier (18), to the transmitting photodiode (19).

6. Circuit arrangement according to one of claims 1 to 5, characterised in that the output signal from the receiving diode (22) is conducted, via an amplifier (23), to the frequency comparators (24, 25).

7. Circuit arrangement according to one of claims 1 to 6, characterised in that a square-wave oscillator (28) with a pulse repetition frequency of 16 MHz is provided for generating the two sigal frequencies (f1, f2) controlling the frequency comparators (24, 25), and that the pulse repetition frequency of this square-wave oscillator (28) is divided, with the aid of two succeeding binary frequency dividers (26, 27), into f1 = 2 MHz and f2 = 1 MHz.

8. Circuit arrangement according to one of claims 1 to 7, characterised in that the switching threshold of the frequency-comparators (24, 25) is set in such a way that the latter deliver, in each case, an output signal with a logical high level (H) if the frequency of the output signal received by the receiving diode (22) is, in each case, greater than f1 or f2, respectively.

9. Circuit arrangement according to one of claims 1 to 8, characterised in that the evaluating logic (29) generates the original data signal in dependence on the level of the output signals conducted in by the frequency comparators (24, 25).

10. Circuit arrangement according to one of the preceding claims, characterised in that the data signal reproduced in the evaluating logic (29) is fed onwards via a driver stage (30).

## Revendications

1. Dispositif de couplage destiné à la transmission de signaux de données bipolaires, pourvu d'un modulateur pouvant être commandé par les signaux de données, modulateur dont les signaux de sortie aboutissent par l'intermédiaire d'un segment optique de transmission des données doté de convertisseurs d'entrée et de sortie à un démodulateur reproduisant le signal de donnée bipolaire, caractérisé en ce que les signaux de données sont reliés par l'intermédiaire d'un coupleur optoélectronique (11, 12) aux entrées de commande (A, B) d'une logique d'évaluation digitale (13) pourvue de trois fréquences de signaux (fa, fb, fc) se trouvant en rapport fixe l'un vis-à-vis de l'autre, en ce que les signaux de sortie (fo) de la logique d'évaluation (13) commandent une diode d'émission photoélectrique (19), diode dont les signaux lumineux sont reliés par un guide d'ondes lumineuses (20) connecté à une diode de réception (22) à deux comparateurs de fréquences (24, 25) pourvus de signaux de fréquence (f1, f2) de rapport constant, comparateurs dont les signaux de sortie commandent une logique d'évaluation (29) reproduisant les signaux de données bipolaires.

2. Dispositif de couplage selon la revendication 1, caractérisé en ce que pour produire les trois fréquences de signaux (fa, fb, fc) est prévu un oscillateur rectangulaire (14), et en ce que la fréquence de récurrence des impulsions de l'oscillateur rectangulaire de 6 MHz est divisée en trois démultiplicateurs de fréquence binaires (15, 16, 17) placés en aval où fa = 3 MHz, fb = 1,5 MHz et fc = 0,75 MHz.

3. Dispositif de couplage selon la revendication 1 ou 2, caractérisé en ce que entre l'oscillateur rectangulaire (14) et les démultiplicateurs de fréquence (15, 16, 17) est connecté un convertisseur du temps d'impulsion (21) destiné à influencer les largeurs d'impulsions des signaux de fréquence (fa, fb, fc).

4. Dispositif de couplage selon l'une ou l'autre des revendications 1 à 3, caractérisé en ce que la logique d'évaluation (13) respectivement une des trois fréquences de signaux (fa, fb, fc) sont reliées à la sortie (C) en fonction du niveau des signaux de données amenés par l'intermédiaire du coupleur optoélectronique (11, 12).

5. Dispositif de couplage selon l'une ou l'autre des revendications 1 à 4, caractérisé en ce que le signal de sortie de la logique d'évaluation (13) est amené par l'intermédiaire d'un amplificateur (18) à la diode d'émission photoélectrique (19).

6. Dispositif de couplage selon l'une ou l'autre des revendications 1 à 5, caractérisé en ce que le signal de sortie de la diode de réception (22) est amené par l'intermédiaire d'un amplificateur (23) aux comparateurs de fréquence (24, 25).

7. Dispositif de couplage selon l'une ou l'autre des revendications 1 à 6, caractérisé en ce que pour la production des deux fréquences de signaux commandant les comparateurs de fréquences (24, 25) est prévu un oscillateur rectangulaire (28) avec une fréquence de récurrence des impulsions de 16 MHz, et en ce que la fréquence de récurrence des impulsions dudit oscillateur rectangulaire (28) est divisée avec deux démultiplicateurs de fréquences binaires (26, 27) placés en aval en f1 = 2 MHz et f2 = 1 MHz.

8. Dispositif de couplage selon l'une ou l'autre des revendications 1 à 7, caractérisé en ce que le seuil de commutation des comparateurs de fréquence (24, 25) est réglé de telle manière que ces derniers fournissent un signal de sortie pourvu d'un niveau logique élevé (H) lorsque la fréquence du signal de sortie obtenu par la diode de réception (22) est plus grande que f1, respectivement f2.

9. Dispositif de couplage selon l'une ou l'autre des revendications 1 à 8, caractérisé en ce que la logique d'évaluation (29) produit le signal de données initial en fonction du niveau des signaux de sortie amenés par les comparateurs de fréquence (24, 25).

10. Dispositif de couplage selon l'une ou l'autre des revendications ci-dessus, caractérisé en ce que le signal de donnée reproduit dans la logique d'évaluation (29) est retransmis par l'intermédiaire d'un étage excitateur (30).
